Europäisches Patentamt

European Patent Office

Office européen des brevets

(11) Publication number: 0 388 533
A1

## EUROPEAN PATENT APPLICATION

(21) Application number: 89200712.1

(51) Int. Cl.⁵: B62D 25/00, B60P 3/14

(22) Date of filing: 21.03.89

(43) Date of publication of application:
26.09.90 Bulletin 90/39

(84) Designated Contracting States:
AT BE CH DE FR GB LI NL

(71) Applicant: Axelson, Gunnar
Mälarbadsvägen 5
S-151 50 Södertälje(SE)

(72) Inventor: Axelson, Gunnar
Mälarbadsvägen 5
S-151 50 Södertälje(SE)

(74) Representative: Rosenquist, Per Olof et al
P.O. Rosenquist Patentbyra AB Storgatan 35
S-151 36 Södertälje(SE)

(54) An arrangement in light trucks.

(57) The present invention relates to an arrangement in light trucks, comprising a floor (4) and a roof (7) with a box-shaped, tightly closable space between. The floor (4) and roof (7) are secured together by means of posts (5, 6) arranged in the corners, to form an upper (7) and a lower (4) permanent loading platform, arranged an optional distance apart, the upper platform simultaneously constituting a work platform. The intermediate space can be closed by flaps and/or tailboard (11, 12, 13).

EP 0 388 533 A1

## An Arrangement in Light Trucks

The present invention relates to an arrangement in light trucks, comprising a floor and a roof with a box shaped, tightly clos-able space between.

Light lorries with platforms are often provided with plastic covers fitted to the design of the vehicle in order to create a covered, protected space for various kinds of equipment. Access to the space is offered by hinged flaps arranged in the plastic cover which, in turn, is mounted on the flaps or edge of the loading platform. A drawback to this solution is poor accessibility to the load area. Neither is any solution offered as to how equipment and so on shall be arranged in the space.

The term "light trucks" here applies primarily to small transport vehicles approximately the size of a passenger vehicle. ·

The object of the present invention is to provide an arrangement which in inexpensive and simple manner permits light trucks to be provided with a flexible, multi-purpose, box-shaped transport and storage space.

This is achieved with the arrangement according to the present invention which is characterised in that the floor and roof consist of loading-platform elements secured together by means of posts arranged in the corners, to form an upper and a lower permanent loading platform, arranged at an optional distance apart, the upper platform simultaneously constituting a work platform, and that the intermediate space is arranged to be closed by flaps and/or tailboard.

The construction according to the invention is simple and stable and uses conventional structural elements while at the same time providing two free loading surfaces. Fittings can be assembled in the space between floor and roof, while still retaining a free loading surface, e.g. for transporting bulky goods, or for use as a work platform, for instance.

The posts between floor and roof may be made in one piece and replace the conventional corner posts usually found in the corners of conventional loading platforms. Alternatively, these conventional corner-posts may be used, in which case supporting elements in the form of pipe sections, for instance, may be arranged between the corner posts on the lower and upper loading-platform elements, respectively. Irrespective of the solution chosen, the great advantage is obtained that the height of the box-shaped space may be chosen optionally.

According to one embodiment of the invention, each side wall consists of an upper flap pivotally attached in the roof, and a lower flap pivotally attached in the floor, said flaps when swung up or down, respectively, forming a loading opening free along its entire length and when swung down or up, respectively, tightly closing said loading opening. This arrangement can be used on all three free sides of the space. However, on one or more of the sides a tailboard, pivotally attached to the roof, can be arranged to cover the entire side. The tailboard is preferably lockable in its horizontal position to form an extension of the upper work or loading surface and can then also provide protection against rain for a person working close the vehicle.

A great advantage of arranging flap-up flaps in the upper loading platform is that, when swung up to vertical position, they provide a protective edge around the upper loading or work platform. The extension of the corner posts is then preferably such as to correspond to the vertical extension of the flaps. The flaps are suitably provided with an edge section intended to be arranged between the front posts.

If necessary traffic signs and other information may be applied on the inside of the flaps suspended in the roof when in flapped-down position, so that they can be swung up during road work, for instance.

Additional advantages of the present invention are that the construction according to the present invention can be subsequently added to vehicles provided with loading platforms. One and the same vehicle can be used both as conventional truck and for covered transports, as well as carrying both fixed equipment and load. Carrying elements and the loading-platform element forming the roof are easily dismantled and the vehicle can thus easily be converted to and from a conventional truck.

The load capacity of the roof is limited in principle only by the strength of the supporting elements and any regulations which may exist.

The design according to the invention also allows interior fittings to be located on the loading-platform element constituting the floor and the loading-platform element forming the roof to be fitted subsequently. The latter may also be provided with pre-mounted components, giving great manufacturing advantages.

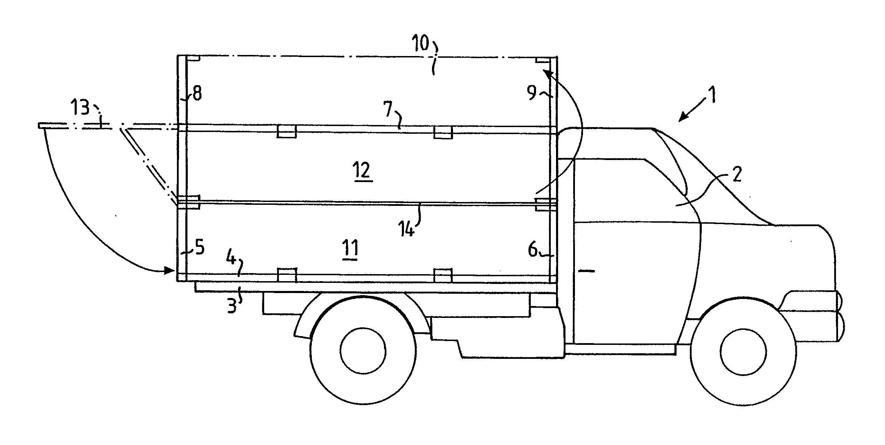

Other advantages, objects and features of the invention will be revealed in the following description with reference to the accompanying drawing in which

the single figure shows schematically one embodiment of an arrangement according to the present invention fitted on a light truck.

The drawing shows schematically a vehicle 1 with driver's cabin 2 and frame side member 3. A loading-platform element 4 is assembled on the frame side member 3. Supporting elements in the form of corner posts 5, 6 are arranged in the corners of the loading-platform element.

The corner posts 5, 6 preferably consist of tubular sections, such as square sections, which may be made in one piece. Alternatively, conventional corner posts used on the loading-platform element may be utilized, sections being inserted into or placed over these to connect floor and roof an optional distance apart.

A second loading-platform element 7 is arranged on the corner posts 5, 6. This may be exactly the same as the loading-platform element 4 or it may be modified as specified by the user. Upwardly directed corner posts 8, 9 may be arranged on the upper loading-platform element and may even be formed by extensions of the corner posts 5, 6. The corner posts projecting above the upper loading surface have several uses, which will be discussed below.

According to a preferred embodiment of the invention, the walls of the box-area may be formed by flaps 11, 12 pivotably mounted in the loading-platform elements forming floor and roof, respectively. The extension of the flaps 11, 12 is preferably such that, in closed position, the long sides of the flaps sealingly close off the area at 14. A seal, e.g. of rubber, may optionally be arranged on one or both long sides of the flaps. When the flaps are swung down or up, a free load opening is formed over the entire length of the platform, with free access to the box area.

When the flaps forming the loading-platform element 7 are swung up, an edge is formed, indicated by the broken line 10. This is suitable for use both when transporting goods on the upper loading surface, and as a protective edge when the upper loading surface is being used as a work platform. The edge may suitably be complemented with a front edge element for attachment on the front posts protruding up over the loading surface.

Instead of the wall being formed by two flaps swinging towards each other, it may be formed by a full tailboard 13 which in the embodiment shown in the drawing forms the rear wall of the box area. The tailboard is advantageously arranged to be lockable in horizontal position, this giving an extension of the loading resp. work platform and also protection against rain. The tailboard may also be arranged to flap up vertically or may be arranged only to flap up vertically. This may be expedient if the vehicle is used for road-works on busy roads. Warning texts or signs may then be applied on the inside of the tailboard and be exhibited when needed.

The supporting elements or corner posts may be arranged integrated with interior fittings which may be pre-assembled and designed to be inserted in one piece into the vehicle, standing either on a loading-platform element, or on a plate to be secured to a loading-platform element already in the vehicle. This offers effective and thus more economic manufacture, as well as increasing user flexibility. The interior fittings may be put in either before, after, or at the same time as the loading-platform element which forms the roof.

The example described above is intended to illustrate but not limit the invention as defined in the following claims.

## Claims

1. An arrangement in light trucks, comprising a floor (4) and a roof (7) with a box-shaped, tightly closable space between, **characterised** in that the floor (4) and roof (7) consist of loading-platform elements, secured together by means of posts (5, 6) arranged in the corners, to form an upper (7) and a lower (4) permanent loading platform, arranged an optional distance apart, the upper platform simultaneously constituting a work platform, and in that the intermediate space is arranged to be closed by flaps and/or tailboard (11, 12, 13).

2. An arrangement as claimed in claim 1, **characterised** in that each side wall consists of an upper flap (12) pivotably attached in the roof, and a lower flap (11) pivotably attached in the floor, said flaps when swung up or down, respectively, forming a loading opening free along its entire length and when swung down or up, respectively, tightly closing said loading opening (at 14).

3. An arrangement as claimed in claim 1 or 2, **characterised** in that the posts (9, 10) extend a distance up beyond the upper loading platform equivalent to the width of the upper side flaps.

4. An arrangement as claimed in any of the preceding claims, **characterised** in that the rear wall consists of a pivotable tailboard (13), hinged in the roof (7) and which can be locked in its horizontal position to form an extension of the upper work or loading surface (7).

5. An arrangement as claimed in any of the preceding claims, **characterised** in that, when swung up, the upper side flaps (12) are arranged to form an edge along the sides of the upper loading surface (7), to which a front edge section can be added and secured in the extensions (9) of the front posts (5).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 445 259 (S.A. DES USINES CHAUSSON) * Figures 1-3; page 3, line 1 - page 4, line 15 * | 1 | B 62 D  25/00 B 60 P   3/14 |
| A | DE-U-8 702 127 (KARL UND WILHELM STEINHAGE OHG) * Figures 1-4; page 4, line 13 - page 7, line 12 * | 1,2 | |
| A | US-A-4 688 308 (R.A. ALVAREZ) * Figure 1; column 3, line 38 - column 4, line 7 * | 1 | |

TECHNICAL FIELDS SEARCHED (Int. Cl.5)

B 62 D
B 60 P
B 60 J

The present search report has been drawn up for all claims

| Place of search | Date of completion of the search | Examiner |
|---|---|---|
| THE HAGUE | 09-11-1989 | CHLOSTA P. |